(19) **Europäisches Patentamt / European Patent Office / Office européen des brevets**

(11) **EP 4 351 072 A1**

(12) # EUROPEAN PATENT APPLICATION
published in accordance with Art. 153(4) EPC

(43) Date of publication:
**10.04.2024 Bulletin 2024/15**

(21) Application number: **23758506.2**

(22) Date of filing: **08.08.2023**

(51) International Patent Classification (IPC):
**H04L 5/00** *(2006.01)*

(52) Cooperative Patent Classification (CPC):
**H04L 5/00**

(86) International application number:
**PCT/KR2023/011638**

(87) International publication number:
**WO 2024/035049 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 US 202263397367 P**

(71) Applicant: **LG Electronics Inc.**
**Seoul 07336 (KR)**

(72) Inventors:
• **HWANG, Seunggye**
**Seoul 06772 (KR)**

• **KO, Hyunsoo**
**Seoul 06772 (KR)**
• **KIM, Kijun**
**Seoul 06772 (KR)**
• **KO, Woosuk**
**Seoul 06772 (KR)**
• **SHIM, Jaenam**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING WIRELESS SIGNAL IN WIRELESS COMMUNICATION SYSTEM**

(57) A method of operating a first device in a wireless communication system according to at least one of the examples disclosed herein may include receiving, through higher layer signaling, configuration information related to positioning, performing a phase measurement for a reference signal based on the configuration information, and transmitting a measurement report related to positioning based on the phase measurement. The phase measurement may include a pair of a first phase measurement and a second phase measurement. The first phase measurement may be related to a carrier phase measurement (CPM) of a carrier of the reference signal, and the second phase measurement paired with the first phase measurement may have a different resolution than the first phase measurement.

FIG. 10

**Description**

[Technical Field]

The present disclosure relates to a wireless communication system, and more particularly, to a method and apparatus for transmitting and receiving a wireless signal.

[Background Art1

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

In one aspect of the present disclosure, a method of operating a first device in a wireless communication system may include receiving, through higher layer signaling, configuration information related to positioning, performing a phase measurement for a reference signal based on the configuration information, and transmitting a measurement report related to positioning based on the phase measurement. The phase measurement may include a pair of a first phase measurement and a second phase measurement. The first phase measurement may be related to a carrier phase measurement (CPM) of a carrier of the reference signal, and the second phase measurement paired with the first phase measurement may have a different resolution than the first phase measurement.
The second phase measurement may be related to a subcarrier phase measurement (ScPM) for subcarriers included in the carrier of the reference signal.
A range of distances can be represented through the second phase measurement may be wider than a range of distances can be represented through the first phase measurement.
The first device may transmit a device capability report related to phase measurement types supported by the first device. The configuration information related to positioning may be determined based on the transmitted device capability report.
The configuration information related to positioning may include information about a plurality of phase measurement types.
The first phase measurement and the second phase measurement may be of phase measurement types selected by the first device from among the plurality of phase measurement types.
The measurement report may include at least one first measurement value based on the phase measurement and at least one second measurement value based on a reference signal timing difference (RSTD) measurement for the reference signal. The first measurement value may include a pair of a measurement value based on the first phase measurement and a measurement value based on the second phase measurement.
The first device may be a user equipment (UE), and the reference signal may be a downlink positioning reference signal (PRS) provided by at least one base station or at least one transmission and reception point (TRP).
In another aspect of the present disclosure, a processor-readable recording medium having recorded thereon a program for executing the above-described method may be provided.
In another aspect of the present disclosure, a first device for performing the above-described operations may be provided.
In another aspect of the present disclosure, a method of receiving a measurement report from a first device by a second device in a wireless communication system may include transmitting, through higher layer signaling, configuration information related to positioning to the first device, and receiving a measurement report from the first device based on the configuration information, the measurement report comprising a phase measurement of a reference signal. The phase measurement may include a pair of a first phase measurement and a second phase measurement. The first phase measurement may be related to a carrier phase measurement (CPM) of a carrier of the reference signal, and the second phase measurement paired with the first phase measurement may have a different resolution than the first phase measurement.

In another aspect of the present disclosure, a second device for receiving the above-described measurement report may be provided.

[Advantageous Effects]

According to an embodiment of the present disclosure, wireless signal transmission/reception procedures can be performed accurately and efficiently.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot. FIG. 1 illustrates physical channels used in a 3rd generation partnership project (3GPP) system as an exemplary wireless communication system, and a general signal transmission method using the same.

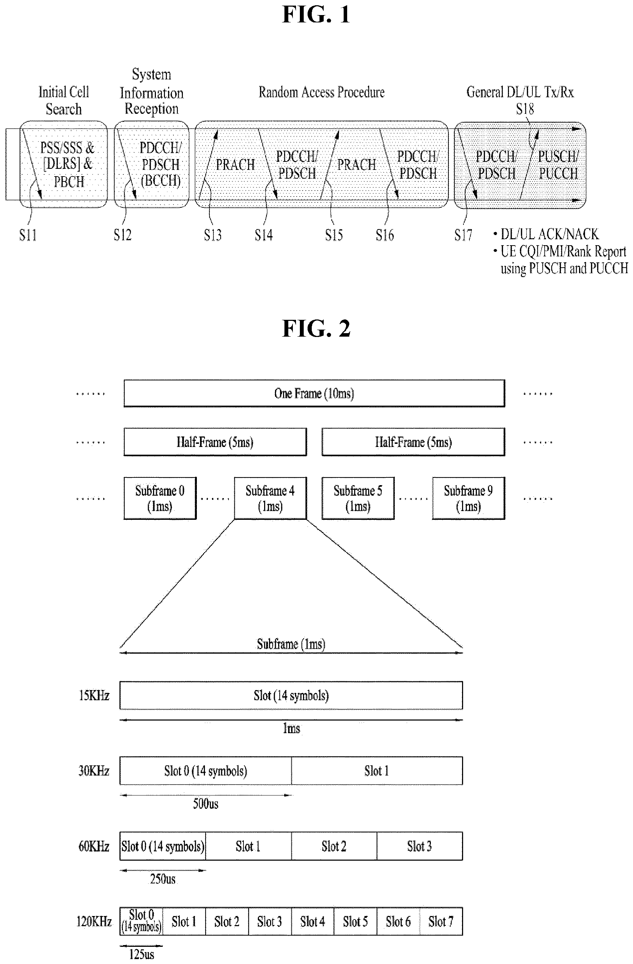

FIG. 2 illustrates a radio frame structure.

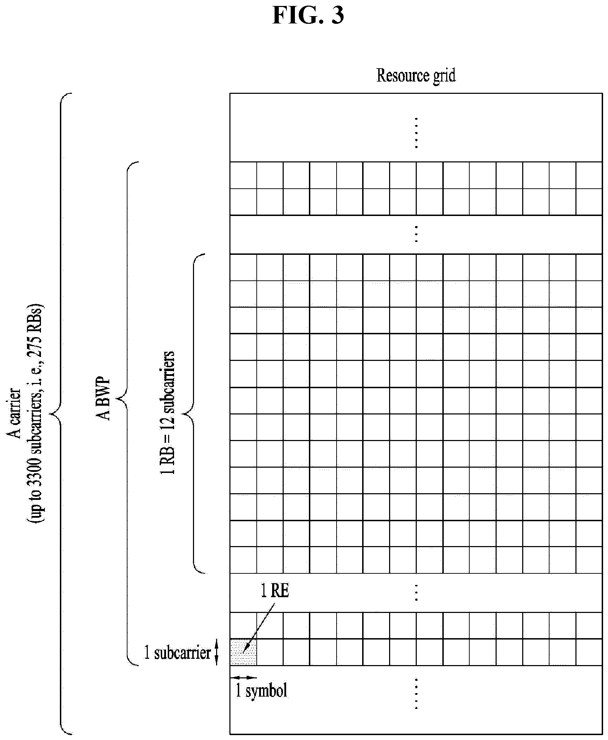

FIG. 3 illustrates a resource grid of a slot.

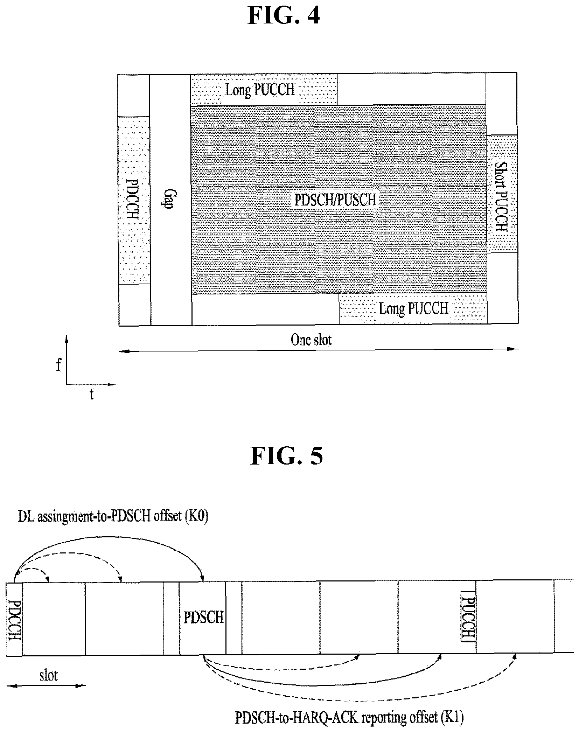

FIG. 4 illustrates exemplary mapping of physical channels in a slot
FIG. 5 illustrates an exemplary physical downlink shared channel (PDSCH) reception and acknowledgement/negative acknowledgement (ACK/NACK) transmission process.

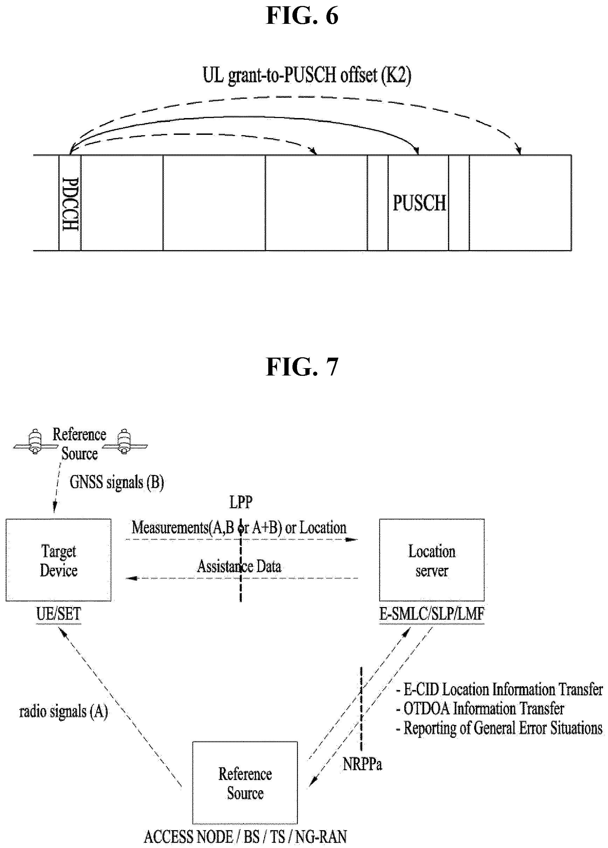

FIG. 6 illustrates an exemplary physical uplink shared channel (PUSCH) transmission process.
FIG. 7 illustrates an example of setting a positioning protocol.

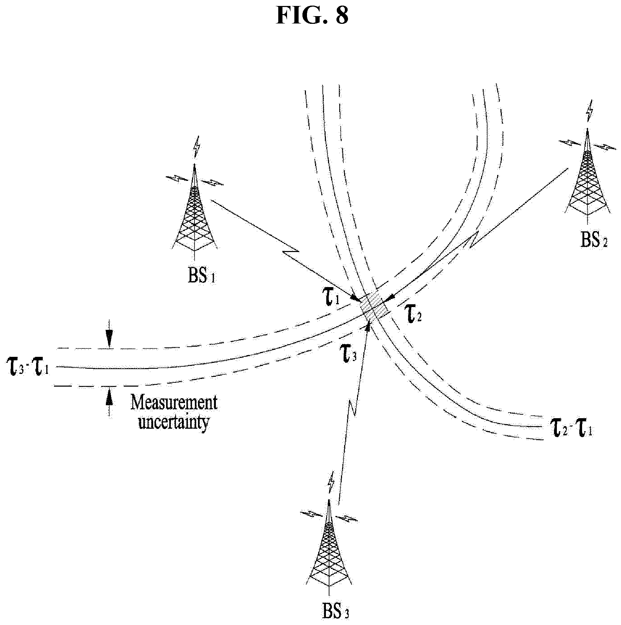

FIG. 8 illustrates an example of OTDOA.

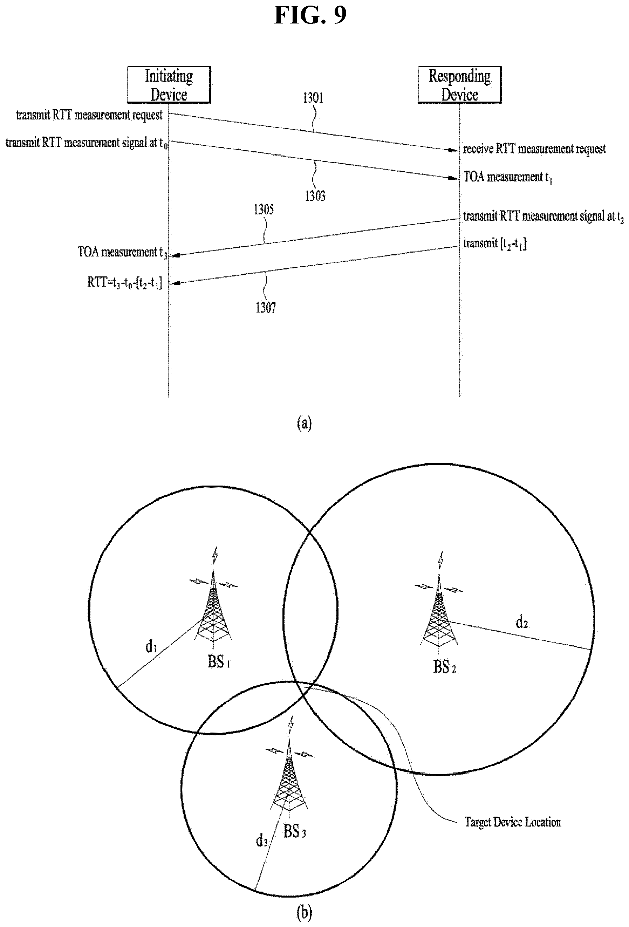

FIG. 9 illustrates an example of Multi RTT.

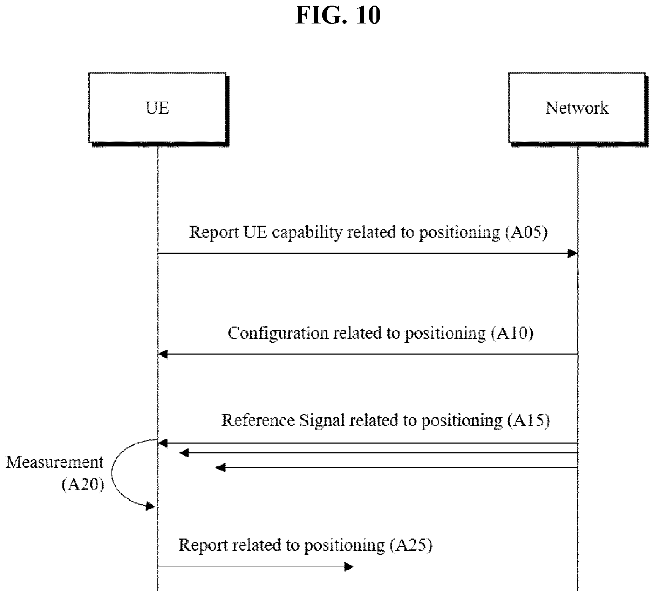

FIG. 10 illustrates a phase measurement and reporting procedure related to positioning in a wireless communication system according to one embodiment.

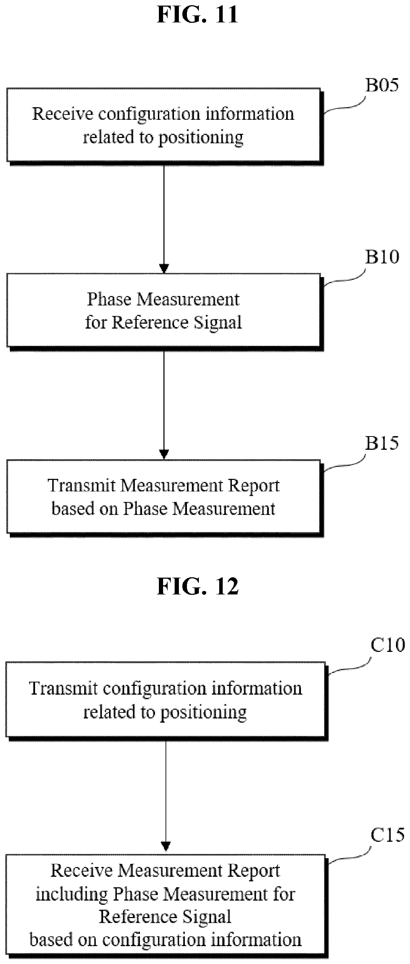

FIG. 11 illustrates the operation of a first device according to one embodiment.
FIG. 12 illustrates the operation of a second device according to one embodiment.

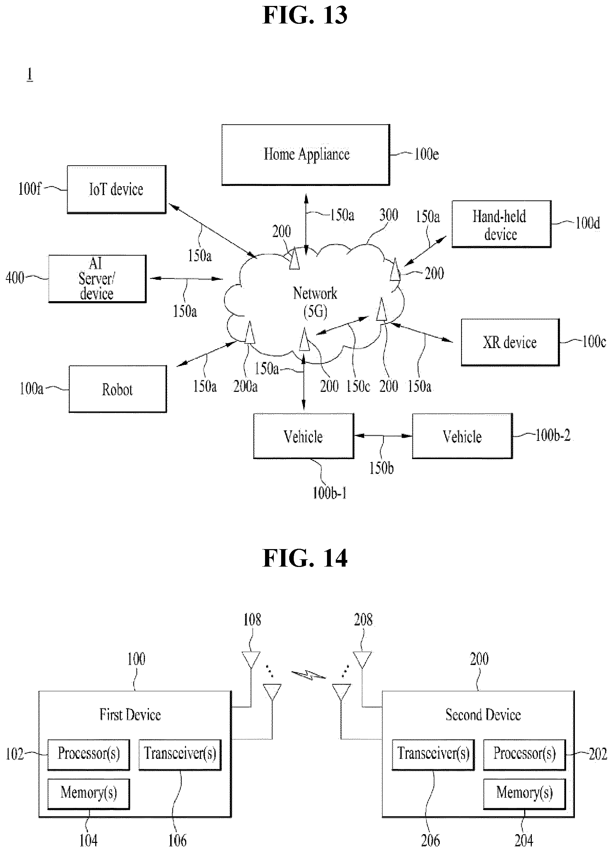

FIGS. 13 to 16 illustrate an example of a communication system 1 and wireless devices applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: Location Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space

- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- TX: Transmitter
- RX: Receiver

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2$^u$) | N$^{slot}_{symb}$ | N$^{frame,u}_{slot}$ | N$^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * N$^{slot}_{symb}$: Number of symbols in a slot <br> * N$^{frame,u}_{slot}$: Number of slots in a frame <br> * N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

**Positioning**

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

$$[Equation\ 1]$$

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV}\ Type\ 1 = (ng\text{-}eNB\ Rx\text{-}Tx\ time\ difference) + (UE\ E\text{-}UTRA\ Rx\text{-}Tx\ time\ difference)$$

$$T_{ADV}\ Type\ 2 = ng\text{-}eNB\ Rx\text{-}Tx\ time\ difference$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

$$[\text{Equation 2}]$$
$$\text{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and BSs (or TRPs) are centered, respectively.

**Phase Measurement Report**

Various techniques may be used to perform positioning in NR, including timing-based methods (e.g. DL-TDOA, UL-RTOA, Multi RTT), angle-based methods (e.g. AoA, AoD), and cell ID-based methods (e.g. E-CID) as described above. In addition, in Rel-18, support for carrier phase measurement based positioning (i.e. NR carrier phase measurement) is discussed.

The phase measurement-based positioning described herein may include at least one of CPM and/or ScPM:

- Carrier Phase Measurement (CPM): In CPM-based positioning, a method of performing and utilizing a phase measurement based on a carrier frequency of a received signal to measure a propagation delay of a reference signal caused by a distance between a BS and a UE has been discussed.
- SubCarrier Phase Measurement (ScPM): (In addition to CPM), a ScPM method is also being considered in which the BS and the UE acquire and utilize, from the measurement, the tendency of the phase difference between subcarriers through the received reference signal.

CPM-based positioning techniques are similar to timing-based positioning techniques in that the propagation delay caused by the distance between the BS and the UE is acquired from measurements. CPM-based positioning may be suitable for achieving higher positioning accuracy than timing-based positioning, but it differs from timing-based positioning techniques in that it provides range information for a larger distance without ambiguity.

Phase measurement based positioning techniques, such as CPM and ScPM, may differ from each other in terms of operation and implementation of a UE that performs phase measurements. Considering this, it is likely that CPM and ScPM will be introduced with different UE capabilities. In addition, CPM and ScPM may have different advantages and have different useful channel environments and conditions. For example, UE capabilities may be defined, including at least one of a first UE capability supporting CPM, a second UE capability supporting CPM and ScPM, or a third UE capability supporting ScPM. As an example, referring to FIG. 10, a UE may report UE capability information related to positioning to a network (A05), and the network may provide positioning configuration (e.g., measurement/reporting, etc.) related to the UE based on the UE reporting (A10). The network may transmit a reference signal based on the positioning configuration (A15). The UE may perform a positioning-related measurement based on the reference signal (A20) and report the result of the measurement (A25). For example, when the UE reports the first UE capability supporting CPM, the network may provide a configuration related to the CPM. When the UE reports the second UE capability supporting the CPM and the ScPM, the network may provide at least one of the configuration related to the CPM and the configuration related to the ScPM.

In view of this background, a method is proposed below for selecting a suitable phase measurement method and performing operations such as measurement and reporting related thereto when one or more phase measurement methods are used for phase measurement-based positioning.

Although the proposed methods are described below mainly for CPM and ScPM based positioning and timing based positioning techniques in the 3GPP NR system, the proposed methods are not limited thereto and may be applied even when there are two or more positioning techniques that can be supported by the BS and UE, and the positioning techniques are consistent or related to the operation of taking measurements. Therefore, the proposed methods may be applied to all kinds of transmission and reception methods used between the BS and UE. For example, at least one positioning technique different from CPM may be applied together with CPM. In one example, the at least one positioning technique different from CPM may include, but is not limited to, at least one of ScPM, OTDOA (e.g., RSTD), AoA, E-CID, and RTT.

One or more of the following proposed methods may be applied in combination, or may be operated independently without any combination. Some terms, symbols, sequences, etc. used herein may be replaced by other terms, symbols, sequences, etc.

Hereinafter, methods including operations of a BS and a UE and transmission and reception procedures related to phase measurement-based positioning and phase measurement reports are proposed. The phase measurement-based positioning may include receiving, a receiver, a reference signal transmitted by a transmitter (e.g., A15 of FIG. 10), measuring a phase value based on the received reference signal (e.g., A20 of FIG. 10), and reporting, the receiver, corresponding information to a higher node (e.g., A25 of FIG. 10).

In the following description, it is assumed that the transmitter is a BS and the receiver is a UE. For example, a positioning reference signal (hereinafter, PRS) transmitted by a BS may be received by a UE, and the UE may measure a phase value based on the received PRS and report the calculated phase measurement result to a higher node (e.g., LMF or BS) (e.g., A25 of FIG. 10).

The method described below may be applied when the transmitter is a UE and the receiver is a BS, or when both the transmitter and receiver are UEs (or BSs), and may also be applied when the reference signal used for transmission and reception and phase measurement is an SRS or SL PRS.

## [1] Phase measurement capability

According to one embodiment, two or more types of UE capabilities are distinguished for phase measurement methods that may be used for positioning purposes, and operations of a higher node and UE related thereto are proposed. The UE capabilities for phase measurement methods may include a first UE capability of a UE supporting at least CPM and a third UE capability of a UE supporting ScPM. A UE performing phase measurement based positioning may support at least one of these capabilities, support both capabilities (e.g., first UE capability and third UE capability), or support a separate capability (e.g., second UE capability) that supports both CPM and ScPM. A UE may be configured to report the capability of the UE to a higher node to perform phase measurement-based positioning (e.g., A05 of FIG. 10). The higher node may transmit configuration and indication information related to appropriate PRS resource allocation, positioning techniques, and measurement reports based on the reported capability of the UE, and the UE may receive the same (e.g., A10 of FIG. 10).

The CPM capability and the ScPM capability may be capabilities of the UE that are distinguished by one or more of the following conditions.

(Option 1-1) The CPM capability and the ScPM capability may be distinguished by different phase measurement configuration/methods performed in the frequency domain. For example, the CPM capability and the ScPM capability may be distinguished by the positions in the frequency domain where the phase measurement is performed. Specifically, the CPM capability may be defined as the capability of the UE to perform a phase measurement for the carrier frequency used for transmission and reception of PRS, and the ScPM capability may be defined as the capability of the UE to perform a phase measurement using the size of the subcarrier spacing or a multiple thereof used for transmission and reception of PRS.

(Option 1-2) The result of each phase measurement may be configured/presented differently between the CPM capability and the ScPM capability. The results of the phase measurements may have different values/parameters/metrics for the CPM capability and the ScPM capability. In this case, when the CPM capability is used, the result of the phase measurement may be presented within the range of the value (e.g., carrier wave length) expressed using the reciprocal of the carrier frequency used for transmission and reception of the PRS, and the resolution step (i.e., the interval by which the reported value may be distinguished) therefor may be presented in proportion. When the ScPM capability is used, the result of the phase measurement may be presented as a value expressed using the reciprocal of the size of the subcarrier spacing used for transmission and reception of the PRS or a multiple thereof, or may be presented as a value represented as a multiple of the phase measurement presented by the CPM capability. Where the ScPM capability is used, the resolution step of the phase measurement may also be presented in proportion to the range that can be represented by the phase measurement.

In the present disclosure, the proposed methods are described assuming that there are multiple positioning-related capabilities that are distinguished as described above. The above distinction of capabilities is one of the specific examples to which the inventive proposal is applicable, and the proposed methods may also be applied in the case of multiple types of capabilities having the same/similar principles.

In addition to the phase measurement capabilities described above, cases where UE capabilities related to measurements in another domain are used may also be considered. For example, a capability of a UE to take a time domain measurement may be considered in the proposed methods. As a specific example, a capability of a UE to take an RSTD measurement (hereinafter, RSTD capability) to support TDOA based positioning may be considered. In this case, the RSTD may comply with the definition of DL RSTD in 3GPP NR TS 38.133, which means the result of the difference between the timings at which two PRS resources are received when the UE receives two or more PRS resources.

## [2] Phase measurement reporting selection

According to one embodiment, it is proposed that a higher node (e.g., LMF or BS) directs reporting for phase measurement-based positioning and the UE sends a corresponding report. Specifically, in the proposed method, the higher node selects and indicates (at least) one of a plurality of phase measurement methods, and the UE selects at least one of the plurality of phase measurement methods to perform the measurement and report the same. In this case, the phase measurement methods that are selectable by the UE are limited based on the information indicated by the higher node. For example, when the higher node indicates N positioning-related measurements selected from among multiple positioning-related measurements, the UE may determine at least one positioning-related measurement to perform among the indicated N positioning-related measurements. At least one of the positioning-related measurements may be related to a phase measurement. Further, the phase measurement method selected in the proposed method may include a method that may be divided into multiple steps.

When the phase measurement-based positioning is performed, the issue of integer ambiguity caused by the limit of the distance that is expressible through the phase domain needs to be considered. As an example of the issue of integer ambiguity, when Phase = $\alpha + 2\pi * \beta$, and $\beta$ is an integer, the measured phase value is the same as a, and therefore there is an ambiguity issue that there is no distinction between the integer values of $\beta$ = 0, 1, 2..., etc. If UE-assisted positioning (i.e., a method in which the UE or BS performs measurement on the PRS/SRS and reports the result to the LMF) is performed, the LMF may be the entity responsible for the final calculation of the location of the UE, and therefore the LMF may need to receive from the UE reporting of the phase measurement result at a level to resolve the integer ambiguity. On the other hand, the LMF may be expected to be able to predict the approximate location of the UE through a tracking algorithm based on the result of previous positioning. Based on this, the LMF may predict the required level of phase measurement to resolve the issue of integer ambiguity. In view of this situation, one embodiment proposes a method in which a higher node indicates to the UE the level of phase measurement required, and the UE reports an appropriate phase measurement result based on the indication.

In one example, a method of distinguishing between two types of phase measurements and indicating them to the higher node is proposed. In the following two differentiated methods, the criterion for capabilities is for illustrative purposes only. Even if the two methods are not differentiated by capabilities, the proposed methods may still be applicable in cases where the range distinguishable by the phase measurement differs between the methods (e.g., CPM has a relatively fine resolution step while representing a relatively narrow range, and ScPM has a coarse resolution step while representing a relatively wide range). For example, the smallest distance unit (e.g., resolution) distinguishable by the CPM may less than the smallest distance unit (e.g., resolution) distinguishable by the ScPM. The resolution of the ScPM may be determined to compensate for the issue of integer ambiguity in the CPM.

In one example, a phase measurement may be reported as follows.

- CPM: A method of reporting phase measurement based on CPM capability (e.g., the range of $[-1/f_c, 1/f_c]$, where $f_c$ may denote the carrier frequency at which the positioning-related RS is transmitted or received.
- ScPM: A method of reporting phase measurement based on ScPM capability (e.g., the range of $[-1/\triangle f_{sc}, 1/\triangle f_{sc}]$), where $\triangle f_{sc}$ may denote the spacing (SCS) between subcarriers included in the carrier on which the positioning-related RS is transmitted or received.

The higher node may select (at least) one of the two types of phase measurement methods described above to provide the indication information to the UE. For example, the indication information may be provided using LPP. For example, the LPP may be assistance data transmitted in the ProvideAssistanceData message body as defined in the 3GPP TS 37.355 standard, or may include a request for positioning measurements transmitted in the RequestLocation-Information message body.

The UE may receive the indication information transmitted by the higher node and perform phase measurement and reporting operations in response thereto. When the indication is a report of the CPM, the UE may determine to measure and report the CPM. If necessary, the UE may be allowed to measure and report the ScPM.

If the information indicated by the higher node is a report of the ScPM, the UE may be configured to measure and report the ScPM and may not be allowed to measure and report the CPM of the UE. This may be intended to limit the UE's selection because, if the higher node requires a report of the ScPM, the unit of information to resolve the integer ambiguity may not be appropriate information for a report of the CPM that presents a lower range.

For example, the operation of the ScPM may be indicated/performed in two or more steps. When the higher node indicates the operation of the ScPM, the steps of the ScPM may be indicated together as detailed information thereon, and the UE performing the report of the ScPM may use one of the steps of the ScPM to perform measurement and reporting. In this case, the operation step of the ScPM may be distinguished by the range represented by the ScPM or, equivalently, by the subcarrier spacing used for the calculation of the phase. In this case, each step of the ScPM may have a distinct resolution step.

For example, when the higher node indicates a specific step of the ScPM, the UE may select a step of the ScPM based on a condition to measure and report the phase. Here, the condition may be determined depending on the ScPM phase indicated by the higher node. As a specific method, when the range represented by the ScPM step indicated by the higher node (e.g., distance between Tx and Rx) is d1 and the range represented by the ScPM step selected by the UE (e.g., distance between Tx and Rx) is d2, the condition may be determined to allow only the case where the relationship d1≤d2 is satisfied. This may be for the purpose of allowing the higher node to determine the degree of integer ambiguity and required positioning accuracy to dictate an appropriate step of the ScPM, considering that the accuracy of phase measurement and the degree of integer ambiguity may differ depending on the range represented by the ScPM, and in general, the accuracy of estimating the distance calculated by phase measurement deteriorates as the ScPM represents a wider range, and conversely, the accuracy of estimating the distance calculated by phase measurement improves as the ScPM represents a narrower range.

In the proposed method, the operation of RSTD may be applied in place of the method of ScPM described above. It may be used when the UE does not have ScPM capability, or when the higher node has not configured the UE to support the operation of ScPM (or has instructed the UE to replace the operation with the operation of RSTD).

As an example, a condition for the RSTD capability may be added and used. As a specific example, it may be applied as follows.

- In the case where the higher node indicates CPM, the UE may perform and report one of the measurements of CPM, ScPM, or RSTD.
- In the case where the higher node indicates ScPM, the UE may perform and report one of the measurements of ScPM, RSTD, or RSTD, but the operation of CPM is not allowed.
- In the case where the higher node indicates RSTD, the UE may perform and report the RSTD measurement, but the operation of CPM and ScPM is not allowed.

The proposed method may be indicated separately for each TRP (or positioning frequency layer, resource set or resource) as a unit. In addition, the UE may determine the method and steps of phase measurement individually on a per TRP (or positioning frequency layer, resource set or resource) basis and report the same. The channel environment and degree of integer ambiguity may differ among TRPs. Given these conditions, appropriate phase measurement methods and steps may be useful in different environments.

## [3] Two layer measurement reporting

According to one embodiment, it is proposed that a higher node (e.g., LMF or BS) direct reporting of phase measurement-based positioning, and the UE report the same. Specifically, tin the proposed method, the higher node indicates phase measurement-based positioning, and the UE performs and reports measurements for one or more of a plurality of phase measurement methods. Here, the phase measurement methods performed by the UE have different ranges and/or resolution steps. The proposed method may also include specific methods and procedures for performing the above operations.

When the phase measurement-based positioning is performed, useful information related to the measured measurement may differ depending on the phase measurement method used. For example, CPM has the limitation of representing a relatively narrow range of distances, but has the advantage of providing high accuracy performance. On the other hand, ScPM can express a relatively wide range of distances, which is advantageous for solving issues caused by integer ambiguity, but may be limited in providing positioning accuracy in cm. To compensate for these mutual drawbacks, i.e., to enable positioning over a wide range of distances while ensuring high accuracy positioning performance, a method for measuring and reporting both CPM and ScPM when the UE is instructed to perform phase measurement is proposed.

When the proposed method is used and the UE is instructed to measure and report phase measurements, the UE may be configured to report the pair of CPM and ScPM to the higher node. The information reported by the UE may be transmitted to the higher node via an LPP, which may include a message field containing the information about the CPM and a message field containing the information about the ScPM. For example, the UE may measure and report both the CPM and the ScPM, based on the UE being instructed to perform phase measurement for positioning, and the CPM and ScPM may be correlated. For example, the paired CPM and ScPM may be measured within a specific time interval or on the same time resource in the time domain. The paired CPM and ScPM may be measured within a specific frequency range or on the same carrier in the frequency domain. For example, the CPM and the ScPM may be related to the same carrier frequency, but the CPM may be a phase measurement for the carrier and the ScPM may be a measurement for the subcarriers included in that carrier. The paired CPM and ScPM may be measurements of the same reference signal (configuration). The paired CPM and ScPM may be measurements of the same node (e.g., BS/TRP and UE with the same ID).

The proposed method may include a method wherein the resolution step of the phase is determined in the message field of each phase measurement. Specifically, one or a combination of two or more of the following detailed methods may be used.

(Option 3-1-A) CPM and ScPM each have their own independent resolution step. For this purpose, the higher node may determine the information about a preferred resolution step for each phase measurement and indicate the same to the UE. The UE may refer to the information about the resolution step provided by the higher node and may also select, apply and report an appropriate resolution step for each phase measurement method. Thus, resolution steps optimized for CPM and ScPM may be independently indicated/selected.

(Option 3-1-B) The minimum unit of the resolution step of the ScPM is set to be the same as the maximum range that the CPM may represent. For example, the resolution step of the ScPM may be set to be at least greater than or equal to the carrier wavelength over which the PRS is transmitted and received. When the ScPM is used to resolve integer ambiguity that is difficult to resolve with the CPM, the ScPM may be limited so as not to present a resolution step for a range that is presentable in the CPM, which may be advantageous in reducing the reporting overhead required for phase measurements.

The proposed method may include determining the maximum range of distances that is presentable in the message field of each phase measurement. Here, the CPM may be set to always present a fixed maximum range of distances, which may be set to be equal to the size of the carrier wavelength. In the case of the ScPM, a maximum range of distances determined based on the size of the subcarrier spacing used for transmission and reception of the PRS may be used. In this case, the operation of the ScPM may be divided into two or more phases to be indicated/performed. When a higher node indicates the operation of the ScPM, the steps of the ScPM may be indicated together as detailed information on the operation, and the UE performing the report on the ScPM may use one of the steps of the ScPM to perform the measurement and reporting. In this case, the operation step of the ScPM may be distinguished by the range represented by the ScPM or, equivalently, by the subcarrier spacing used for the calculation of the phase measurement. In this case, each step of the ScPM may have a distinct resolution step.

In the proposed method, when the higher node indicates a specific step of the ScPM, the UE may select a step of the ScPM based on a condition to measure and report the phase. Here, the condition may be determined depending on the ScPM phase indicated by the higher node. As a specific method, when the range (e.g., distance between Tx and Rx) can be represented through the ScPM step indicated by the higher node is d1 and the range (e.g., the distance between Tx and Rx) can be represented through the ScPM setp selected by the UE is d2, the condition may be determined to allow only the case where the relationship d1≤d2 is satisfied. This may be for the purpose of allowing the higher node to determine the degree of integer ambiguity and required positioning accuracy to dictate an appropriate step of the ScPM, considering that the accuracy of phase measurement and the degree of integer ambiguity may differ depending on the unit represented by the ScPM, and in general, the accuracy of estimating the distance calculated by phase measurement deteriorates as the ScPM represents a wider unit, and conversely, the accuracy of estimating the distance calculated by phase measurement improves as the ScPM represents a narrower unit.

In the proposed method, the operation of RSTD may be applied in place of the method of ScPM. It may be used when the UE does not have ScPM capability, or when the higher node has not configured the UE to support the operation of ScPM (or has instructed the UE to replace the operation with the operation of RSTD).

Reporting of RSTD measurements may be added to the proposed method. For example, the UE may report both the CPM and/or ScPM and the RSTD measurement to the higher node.

FIG. 11 illustrates the operation of a first device according to one embodiment. The first device may be a UE or a network node (e.g., BS or TRP) in a wireless communication system.

Referring to FIG. 11, the first device may receive configuration information related to positioning through higher layer signaling (B05).

The first device may perform a phase measurement for a reference signal based on the configuration information (B10). The phase measurement may include a pair of a first phase measurement and a second phase measurement. The first phase measurement may be related to a carrier phase measurement (CPM) for a carrier of the reference signal. The second phase measurement paired with the first phase measurement may have a different resolution than the first phase measurement. The second phase measurement may be related to a subcarrier phase measurement (ScPM) for subcarriers included in the carrier of the reference signal. A range of distances can be represented through the second phase measurement may be wider than a range of distances can be represented through the first phase measurement.

The first device may transmit a measurement report related to positioning based on the phase measurement (B15). The measurement report may include a pair of a measurement value based on the first phase measurement and a measurement value based on the second phase measurement.

In one example, the first device may transmit a device capability report related to phase measurement types supported by the first device. The configuration information related to positioning may be determined based on the transmitted device capability report.

In one example, the configuration information related to positioning may include information about a plurality of phase measurement types. In one example, the first phase measurement and the second phase measurement may be of phase measurement types selected by the first device from among the plurality of phase measurement types.

The measurement report may further include at least one measurement value based on a reference signal timing difference (RSTD) measurement for the reference signal.

The reference signal may be a downlink positioning reference signal (PRS) provided by the at least one BS or the at least one transmission and reception point (TRP).

FIG. 12 illustrates the operation of a second device according to one embodiment. The second device may be a network node (e.g., BS or TRP) or a UE in a wireless communication system.

Referring to FIG. 12, the second device may transmit configuration information related to positioning to the first device through higher layer signaling (C05).

The second device may receive, from the first device, a measurement report including a phase measurement of a reference signal based on the configuration information (C10). The phase measurement may include a pair of a first phase measurement and a second phase measurement. The first phase measurement may be related to a carrier phase measurement (CPM) for a carrier of the reference signal. The second phase measurement paired with the first phase measurement may have a different resolution than the first phase measurement. The second phase measurement may be related to a subcarrier phase measurement (ScPM) for subcarriers included in the carrier of the reference signal. A range of distances can be represented through the second phase measurement may be wider than a range of distances can be represented through the first phase measurement.

The measurement report may include a pair of a measurement value based on the first phase measurement and a measurement value based on the second phase measurement.

In one example, the second device may receive a device capability report related to phase measurement types supported by the first device. The configuration information related to positioning may be determined based on the transmitted device capability report.

In one example, the configuration information related to positioning may include information about a plurality of phase measurement types. In one example, the first phase measurement and the second phase measurement may be phase measurement types selected by the first device from among the plurality of phase measurement types.

The measurement report may further include at least one measurement value based on a reference signal timing difference (RSTD) measurement for the reference signal.

The reference signal may be a downlink positioning reference signal (PRS) provided by the second device.

FIG. 13 illustrates a communication system 1 applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

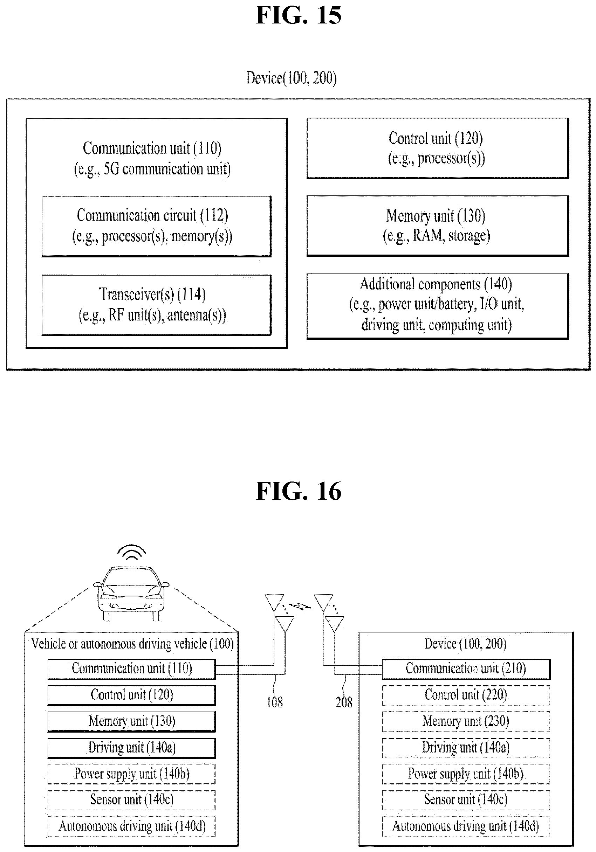

FIG. 15 illustrates another example of a wireless device applied to the present disclosure. The wireless device may be implemented in various forms according to a use-case/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of operating a first device in a wireless communication system, the method comprising:

   receiving, through higher layer signaling, configuration information related to positioning;
   performing a phase measurement for a reference signal based on the configuration information; and
   transmitting a measurement report related to positioning based on the phase measurement,
   wherein the phase measurement comprises a pair of a first phase measurement and a second phase measurement,
   wherein the first phase measurement is related to a carrier phase measurement (CPM) of a carrier of the reference signal,
   wherein the second phase measurement paired with the first phase measurement has a resolution different from a resolution of the first phase measurement.

2. The method of claim 1, wherein the second phase measurement is related to a subcarrier phase measurement (ScPM) for subcarriers included in the carrier of the reference signal.

3. The method of claim 1, wherein a range of distances can be represented through the second phase measurement is wider than a range of distances can be represented through the first phase measurement.

**4.** The method of claim 1, further comprising:
transmitting a device capability report related to phase measurement types supported by the first device.

**5.** The method of claim 4, wherein the configuration information related to positioning is determined based on the transmitted device capability report.

**6.** The method of claim 1, wherein the configuration information related to positioning comprises information about a plurality of phase measurement types,
wherein the first phase measurement and the second phase measurement are of phase measurement types selected by the first device from among the plurality of phase measurement types.

**7.** The method of claim 1, wherein the measurement report comprises at least one first measurement value based on the phase measurement and at least one second measurement value based on a reference signal timing difference (RSTD) measurement for the reference signal.

**8.** The method of claim 7, wherein the first measurement value comprises a pair of a measurement value based on the first phase measurement and a measurement value based on the second phase measurement.

**9.** The method of claim 1, wherein the first device is a user equipment (UE),
wherein the reference signal is a downlink positioning reference signal (PRS) provided by at least one base station or at least one transmission and reception point (TRP).

**10.** A processor-readable recording medium having recorded thereon a program for executing the method of claim 1.

**11.** A first device for wireless communication, the first device comprising:

a memory configured to store instructions; and
a processor configured to perform operations by executing the instructions,
wherein the operations of the processor comprise:

receiving, through higher layer signaling, configuration information related to positioning;
performing a phase measurement for a reference signal based on the configuration information; and
transmitting a measurement report related to positioning based on the phase measurement,
wherein the phase measurement comprises a pair of a first phase measurement and a second phase measurement,
wherein the first phase measurement is related to a carrier phase measurement (CPM) of a carrier of the reference signal,
wherein the second phase measurement paired with the first phase measurement has a resolution different from a resolution of the first phase measurement.

**12.** The first device of claim 11, wherein the first device is an application specific integrated circuit (ASIC) or a digital signal processing device.

**13.** The first device of claim 11, wherein the first device is a user equipment (UE) operating in a wireless communication system.

**14.** A method of receiving a measurement report from a first device by a second device in a wireless communication system, the method comprising:

transmitting, through higher layer signaling, configuration information related to positioning to the first device; and
receiving, from the first device based on the configuration information, a measurement report including a phase measurement of a reference signal,
wherein the phase measurement comprises a pair of a first phase measurement and a second phase measurement,
wherein the first phase measurement is related to a carrier phase measurement (CPM) of a carrier of the reference signal,
wherein the second phase measurement paired with the first phase measurement has a resolution different from a resolution of the first phase measurement.

15. A second device for receiving a measurement report from a first device in a wireless communication system, the second device comprising:

a memory configured to store instructions; and
a processor configured to perform operations by executing the instructions,
wherein the operations of the processor comprise:

transmitting, through higher layer signaling, configuration information related to positioning to the first device; and
receiving, the first device based on the configuration information, a measurement report including a phase measurement of a reference signal,
wherein the phase measurement comprises a pair of a first phase measurement and a second phase measurement,
wherein the first phase measurement is related to a carrier phase measurement (CPM) of a carrier of the reference signal,
wherein the second phase measurement paired with the first phase measurement has a resolution different from a resolution of the first phase measurement.

EP 4 351 072 A1

# FIG. 1

Initial Cell Search — PSS/SSS & [DLRS] & PBCH — S11

System Information Reception — PDCCH/PDSCH (BCCH) — S12

Random Access Procedure — PRACH (S13) — PDCCH/PDSCH (S14) — PRACH (S15) — PDCCH/PDSCH (S16)

General DL/UL Tx/Rx S18 — PDCCH/PDSCH (S17) — PUSCH/PUCCH
• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) — Subframe 4 (1ms) — Subframe 5 (1ms) — Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

Resource grid

A carrier (up to 3300 subcarriers, i. e., 275 RBs)

A BWP

1 RB = 12 subcarriers

1 RE

1 subcarrier

1 symbol

# FIG. 4

One slot

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

PDCCH

PUSCH

# FIG. 7

Reference
Source

GNSS signals (B)

LPP

Measurements(A,B or A+B) or Location

Assistance Data

Target
Device

Location
server

UE/SET

E-SMLC/SLP/LMF

- E-CID Location Information Transfer
- OTDOA Information Transfer
- Reporting of General Error Situations

radio signals (A)

NRPPa

Reference
Source

ACCESS NODE / BS / TS / NG-RAN

## FIG. 8

# FIG. 9

Initiating Device

Responding Device

transmit RTT measurement request

transmit RTT measurement signal at $t_0$

1301

1303

1305

receive RTT measurement request

TOA measurement $t_1$

transmit RTT measurement signal at $t_2$

transmit $[t_2-t_1]$

TOA measurement $t_3$

RTT=$t_3$-$t_0$-$[t_2$-$t_1]$

1307

(a)

$d_1$

BS$_1$

$d_2$

BS$_2$

$d_3$

BS$_3$

Target Device Location

(b)

# FIG. 10

UE

Network

Report UE capability related to positioning (A05)

Configuration related to positioning (A10)

Reference Signal related to positioning (A15)

Measurement (A20)

Report related to positioning (A25)

# FIG. 11

Receive configuration information related to positioning — B05

Phase Measurement for Reference Signal — B10

Transmit Measurement Report based on Phase Measurement — B15

# FIG. 12

Transmit configuration information related to positioning — C10

Receive Measurement Report including Phase Measurement for Reference Signal based on configuration information — C15

# FIG. 13

# FIG. 14

# FIG. 15

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 16

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
| --- |
| **PCT/KR2023/011638** |

### A. CLASSIFICATION OF SUBJECT MATTER

**H04L 5/00**(2006.01)i

According to International Patent Classification (IPC) or to both national classification and IPC

### B. FIELDS SEARCHED

Minimum documentation searched (classification system followed by classification symbols)

H04L 5/00(2006.01); G01S 19/25(2010.01); G01S 3/00(2006.01); G01S 5/00(2006.01); G01S 5/02(2010.01); H04B 1/3827(2015.01); H04W 4/02(2009.01); H04W 4/024(2018.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상위 계층 시그널링(higher layer signaling), 포지셔닝 관련 설정 정보(positioning related configuration information), 위상 측정(phase measurement), CPM(carrier phase measurement), 해상도(resolution)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0113345 A (DATANG MOBILE COMMUNICATIONS EQUIPMENT CO., LTD.) 15 September 2021 (2021-09-15)<br>See paragraphs [0053], [0149]-[0152] and [0205]-[0218]; claims 1 and 3; and figures 2 and 6. | 1,3-15 |
| A | | 2 |
| Y | US 2022-0015058 A1 (SAMSUNG ELECTRONICS CO., LTD.) 13 January 2022 (2022-01-13)<br>See paragraphs [0091]-[0092] and [0184]-[0197]; and figures 4 and 7. | 1,3-15 |
| Y | KR 10-2021-0097784 A (DATANG MOBILE COMMUNICATIONS EQUIPMENT CO., LTD.) 09 August 2021 (2021-08-09)<br>See claim 6. | 7-8 |
| A | US 2022-0244402 A1 (QUALCOMM INCORPORATED) 04 August 2022 (2022-08-04)<br>See paragraphs [0078]-[0082]; and figure 10. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2023** | **24 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/011638**

### C.    DOCUMENTS CONSIDERED TO BE RELEVANT

| Category* | Citation of document, with indication, where appropriate, of the relevant passages | Relevant to claim No. |
|---|---|---|
| A | WO 2021-185454 A1 (NOKIA TECHNOLOGIES OY) 23 September 2021 (2021-09-23)<br>See claims 1-13. | 1-15 |

Form PCT/ISA/210 (second sheet) (July 2022)

| INTERNATIONAL SEARCH REPORT | | | International application No. | |
|---|---|---|---|---|
| Information on patent family members | | | **PCT/KR2023/011638** | |

| Patent document cited in search report | | | Publication date (day/month/year) | Patent family member(s) | | | Publication date (day/month/year) |
|---|---|---|---|---|---|---|---|
| KR | 10-2021-0113345 | A | 15 September 2021 | CN | 111435159 | A | 21 July 2020 |
| | | | | CN | 111435159 | B | 22 March 2022 |
| | | | | EP | 3910364 | A1 | 17 November 2021 |
| | | | | EP | 3910364 | A4 | 01 June 2022 |
| | | | | JP | 2022-517070 | A | 04 March 2022 |
| | | | | JP | 7225414 | B2 | 20 February 2023 |
| | | | | TW | 202027546 | A | 16 July 2020 |
| | | | | TW | I717184 | B | 21 January 2021 |
| | | | | US | 2022-0082652 | A1 | 17 March 2022 |
| | | | | WO | 2020-143403 | A1 | 16 July 2020 |
| US | 2022-0015058 | A1 | 13 January 2022 | CN | 113922081 | A | 11 January 2022 |
| | | | | CN | 113923685 | A | 11 January 2022 |
| | | | | EP | 3937306 | A1 | 12 January 2022 |
| | | | | JP | 2022-016284 | A | 21 January 2022 |
| | | | | JP | 7096926 | B2 | 06 July 2022 |
| | | | | KR | 10-2022-0006452 | A | 17 January 2022 |
| | | | | KR | 10-2023-0037545 | A | 16 March 2023 |
| | | | | US | 11677148 | B2 | 13 June 2023 |
| | | | | US | 11733831 | B2 | 22 August 2023 |
| | | | | US | 11789648 | B2 | 17 October 2023 |
| | | | | US | 2022-0011909 | A1 | 13 January 2022 |
| | | | | US | 2022-0011976 | A1 | 13 January 2022 |
| | | | | US | 2022-0013907 | A1 | 13 January 2022 |
| | | | | US | 2023-0209623 | A1 | 29 June 2023 |
| | | | | WO | 2022-007149 | A1 | 13 January 2022 |
| | | | | WO | 2022-007592 | A1 | 13 January 2022 |
| | | | | WO | 2022-010215 | A1 | 13 January 2022 |
| KR | 10-2021-0097784 | A | 09 August 2021 | CN | 111343579 | A | 26 June 2020 |
| | | | | CN | 111343579 | B | 06 August 2021 |
| | | | | EP | 3902292 | A1 | 27 October 2021 |
| | | | | EP | 3902292 | A4 | 16 February 2022 |
| | | | | JP | 2022-514430 | A | 10 February 2022 |
| | | | | TW | 202106057 | A | 01 February 2021 |
| | | | | TW | I721710 | B | 11 March 2021 |
| | | | | US | 2022-0043099 | A1 | 10 February 2022 |
| | | | | WO | 2020-125310 | A1 | 25 June 2020 |
| US | 2022-0244402 | A1 | 04 August 2022 | CN | 116745648 | A | 12 September 2023 |
| | | | | KR | 10-2023-0142481 | A | 11 October 2023 |
| | | | | TW | 202232133 | A | 16 August 2022 |
| | | | | WO | 2022-169499 | A1 | 11 August 2022 |
| WO | 2021-185454 | A1 | 23 September 2021 | US | 2023-0147613 | A1 | 11 May 2023 |

Form PCT/ISA/210 (patent family annex) (July 2022)